# DEMANDE DE BREVET EUROPEEN

(11) **EP 1 091 479 A1**
(43) Date de publication de la demande: **11.04.2001**
(21) Numéro de dépôt: 00810891.2
(22) Date de dépôt: 27.09.2000
(51) Int. Cl.: H02N 2/16, H01L 41/09

(54) **Moteur ultrasonique à onde progressive**

(30) Priorité: 05.10.1999 FR 9912405
(71) Demandeur: Metabole Development et Conseil, 74300 Cluses (FR)
(72) Inventeur: Grehant, Bernard, 74300 Nancy-sur-Cluses (FR)
(74) Mandataire: Meylan, Robert Maurice

(57) **Abrégé**

Il comprend un stator en forme de couronne (2), deux groupes de transducteurs électromécaniques (3 à 6). Chaque groupe comprend une paire de transducteurs longitudinaux diamétralement opposés, polarisés en sens opposés, disposés perpendiculairement au stator (2). Les transducteurs sont en contact permanent avec le stator (2) et excités par un courant alternatif avec un déphasage de π/2 entre les groupes pour engendrer à la surface du stator (2) une déformation en forme d'onde progressive. Le moteur comprend au moins un rotor (1) maintenu élastiquement en contact avec le stator (2) pour son entraînement en rotation par l'onde progressive engendrée sur le stator. Le stator n'est en contact avec le stator que par deux segments (9,10) égaux et diamétralement opposés et dont l'étendue cumulée est au plus égale à une longueur d'onde de l'onde progressive engendrée dans le stator. Avantageusement, ces segments (9,10) sont eux-même subdivisés en quatre dents (9a-d,10a-d).

## Description

L'invention concerne un moteur ultrasonique à onde progressive comprenant au moins un stator en forme de couronne, deux groupes de transducteurs électromécaniques comprenant chacun au moins une paire de transducteurs longitudinaux diamétralement opposés, polarisés en sens opposés, disposés perpendiculairement au stator, c'est-à-dire parallèlement à l'axe du moteur, répartis sur le stator, en contact permanent avec le stator et excités par un courant alternatif avec un déphasage de π/2 entre les groupes de manière à engendrer à la surface du stator une déformation en forme d'onde progressive, et au moins un rotor maintenu élastiquement en contact avec le stator pour son entraînement en rotation par l'onde progressive engendrée sur le stator.

De tels moteurs sont connus des brevets FR 2 709 214 et FR 2 743 457. Ces moteurs piézo-électriques sont le résultat de recherches tendant à simplifier le mode d'excitation proposé antérieurement dans le brevet US 4 562 374 qui décrit pour la première fois un moteur à entraînement à onde progressive par le contact entre un rotor et un stator annulaire dont l'ensemble des points de la surface de contact est le siège d'un mouvement elliptique et dans lequel la création d'une onde progressive dans le stator est obtenue par l'application du stator sur un anneau de céramique piézo-électrique travaillant en mode d31. La simplification consiste à remplacer l'anneau de céramique piézo-électrique par des excitateurs en forme de bâtonnets utilisant le mode de vibrations longitudinales ou mode d33 présentant de meilleures performances que le mode transverse d31. En outre, les excitateurs peuvent être constitués de bâtonnets céramiques standard beaucoup moins coûteux à réaliser que les anneaux plats à polarisation alternée. Une structure travaillant de manière analogue est également décrite dans le brevet EP 0 569 673.

La structure décrite dans le brevet FR 2 709 214 est composée de deux rotors coaxiaux associés à deux stators montés entre les rotors et de bâtonnets céramiques à double polarisation disposés entre les stators et dont les extrémités sont respectivement reliées à chacun des stators. Cette structure symétrique est avantageusement utilisée pour bénéficier naturellement d'un plan nodal formant référence fixe et permettant la fixation du moteur au bâti et l'alimentation des transducteurs au moyen d'un connecteur disposé dans ce plan nodal, comme décrit dans le brevet FR 2 745 664. A première vue, ces structures paraissent pratiques et faciles à mettre en oeuvre. Toutefois, elles présentent en fait un inconvénient majeur, résidant dans le fait que même en partant de pièces parfaites sur le plan géométrique, on ne peut s'affranchir de déformations de l'anneau statorique lors de l'opération de précontrainte statique des transducteurs. La structure décrite dans le brevet EP 0 569 673 paraît moins sujette à ce type de déformation, du fait du caractère massif du noyau central utilisé, mais c'est oublier l'effet d'amplification recherchée par les inventeurs, effet amplificateur qui s'applique autant aux déformations statiques, indésirables, qu'aux déformations dynamiques. L'amplitude de ces déformations statiques peut dépasser largement celle de l'onde progressive, de sorte que l'on est très loin des conditions de contact obtenues dans le cas d'une l'excitation par anneau céramique uniforme géométriquement, collé au stator et sans précontrainte. La compensation de ces défauts nécessite un ponçage des pièces après montage et serrage de la structure, opération qui s'accommode mal d'un processus simple et qui rend problématique un traitement de surfaces ultérieur desdites pièces. La non compensation de ces défauts peut se révéler catastrophique en termes de performances. Si l'on considère, par exemple, une structure du type décrit dans le brevet FR 2 773 924 comportant, pour chaque stator, quatre éléments excitateurs, de manière à y engendrer une onde progressive de rang 3 (trois longueurs d'onde), si l'un des excitateurs est plus long que les autres, par exemple de 10 µm, la déformation statique engendrée est de loin supérieure à l'amplitude de l'onde progressive qui est de quelques µm. Il en résulte que le contact rotor-stator n'a lieu que dans la zone située au-dessus du bâtonnet : le contact est moteur sur une demi-onde positive et résistant sur une demi-onde négative, de telle sorte que le couple résultant est nul et que le moteur ne tourne pas. On voit par là qu'il est illusoire, dans une fabrication industrielle, de remédier à ce défaut.

Même dans le cas où ces défauts géométriques sont parfaitement compensés, un nouvel effet vient limiter la performance de tels moteurs à excitation longitudinale. Il s'agit de la superposition de vibrations radiales aux vibrations normales et tangentielles engendrées dans le stator. Le système de précontrainte centrale des céramiques est à l'origine de la composante radiale de vibration. Cet effet est décrit dans le brevet Yasuo, qui cherche en particulier à en tirer profit en inclinant la zone de contact entre stator et rotor. Dans ce cas, c'est bien la superposition des vitesses vibratoires qui agit.

Cependant, le fait que l'onde progressive soit de rang multiple a pour conséquence que, à tout instant, plusieurs zones diamétralement opposées du rotor, en contact avec les crêtes de l'onde progressive, sont simultanément soumises à des forces radiales antagonistes. Pour ne pas perdre autant (sinon plus) d'énergie dans ce type de contact, que ce qu'on recueille dans le mouvement, il faut :
- soit que le rotor présente une grande souplesse dans le sens radial (tout en restant raide dans le sens tangentiel et normal), ce qui peut être obtenu par sillons dans le rotor,
- soit modifier le mode de contact.

Il existe en effet dans l'art antérieur de nombreuses réalisations qui exploitent un contact discontinu entre rotor et stator. Dans ces réalisations, on utilisera comme ensemble stator un, deux éléments vibrants ou plus, répartis angulairement. Chaque élément vibrant utilisé présente à sa surface un déplacement elliptique du fait d'une excitation réalisée selon les cas par deux excitateurs perpendiculaires (brevets SU 681479 et US 4 613 782) ou alignés (FR 2 709 213 et US 5,532, 540).

Dans tous ces cas, les éléments vibrants forment des sous-ensembles stator. Ils sont alimentés en phase ou avec un déphasage lié à leur nombre et à leur répartition géométrique (FR 2 709 213) et placés sur un même bâti fixe, mais ne sont pas mécaniquement couplés entre eux.

Il existe enfin dans l'art antérieur de nombreuses réalisations exploitant un contact discontinu entre rotor et stator, mais cette fois sans recourir à une alimentation diphasée. Le principe est d'utiliser une composante tangentielle de la vitesse vibratoire, prélevée sur des petites protubérances liées à un corps élastique sur lequel un dispositif excitateur génère des ondes stationnaires. Le brevet US 4 882 500 décrit différentes applications de moteurs linéaires ou rotatifs, dont l'intérêt est de faire appel à une seule voie d'alimentation électrique pour exciter une plaque élastique. Comparés aux dispositifs à onde progressive, ces moteurs plus économiques présentent des performances faibles. Les zones de la plaque où le mouvement elliptique est utilisable représentent en effet une très faible portion de celle-ci.

L'invention a pour but d'obvier aux inconvénients susmentionnés et, plus particulièrement, de supprimer les effets parasites des vibrations radiales.

L'invention consiste à utiliser un stator de moteur à onde progressive et excitateurs longitudinaux dont on n'exploite, par rotor, que deux ou quatre zones de contact diamétralement opposées.

Le moteur selon l'invention est caractérisé en ce que le stator n'est en contact avec le rotor que par au moins une paire de segments égaux et diamétralement opposés et dont l'étendue cumulée est au plus égale à une longueur d'onde de l'onde progressive engendrée dans le stator.

Les effets parasites des vibrations radiales se trouvent ainsi supprimés et l'invention permet d'exercer une pression de contact plus importante entre stator et rotor.

Dans les brevets US 5,298,829 et EP 0 441 540, il est proposé, dans un but différent, de limiter le contact entre le stator et le rotor d'un moteur piézo-électrique selon deux segments dentés diamétralement opposés. Compte tenu du mode utilisé, l'étendue cumulée des zones d'appui est notablement supérieure à une longueur d'onde de sorte que ce contact limité n'a pas du tout l'effet recherché par l'invention.

En outre, en ce qui concerne la présente invention, l'introduction d'un caractère alterné dans le mode de contact permet une mesure indirecte de la vitesse du rotor à partir des seuls signaux d'alimentation du stator.

Le dessin annexé représente, à titre d'exemple, un mode d'exécution de l'invention.

La figure 1 est une vue en perspective des éléments essentiels d'un moteur à un stator et un rotor selon l'invention.

La figure 2 est une vue en perspective du stator du moteur représenté à la figure 1.

La figure 3 est un exemple d'enregistrement de la phase relative entre l'intensité d'une voie d'alimentation et la tension d'alimentation pour un moteur selon la figure 1.

La figure 4 représente le schéma électrique utilisé pour l'enregistrement représenté à la figure 3.

La figure 5 représente une simulation de l'effet obtenu par une onde progressive à trois longueurs d'onde.

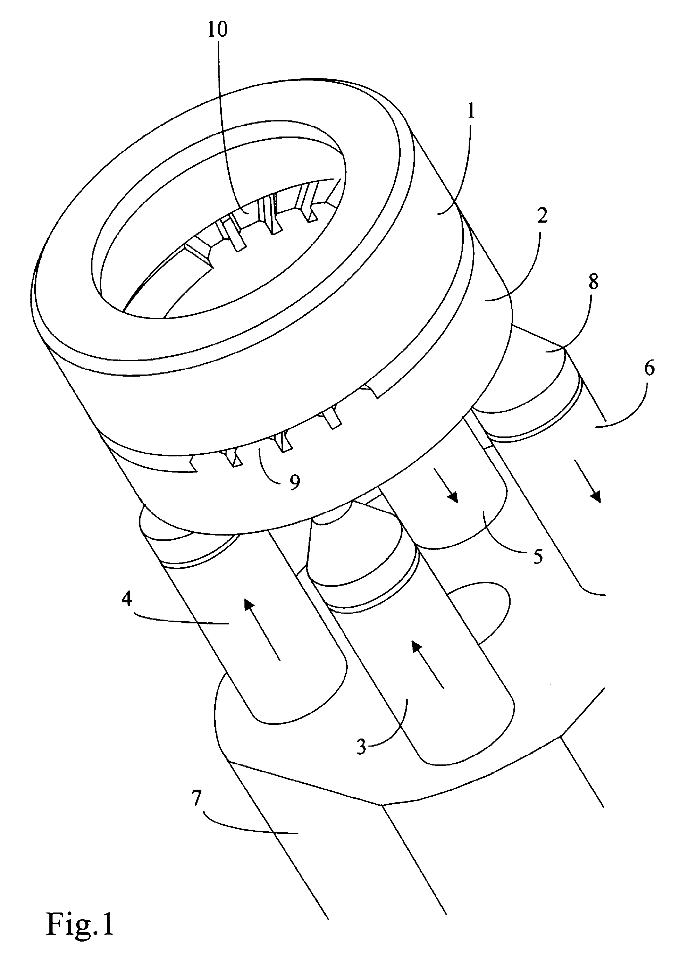

Le moteur schématiquement représenté à la figure 1 présente une structure dérivée des structures symétriques des moteurs piézo-électriques à onde progressive décrites dans les brevets FR 2 709 214 et 2.743 457. La structure est ici dissymétrique, c'est-à-dire que le moteur comporte un seul rotor 1 appliqué contre un stator 2 associé à quatre transducteurs électromécaniques 3, 4, 5, 6 prenant appui sur une embase rigide 7. Le rotor et le stator sont de forme annulaire. Les transducteurs électromécaniques 3 à 6 sont de type piézo-électrique ou magnétostrictif ou de tout autre type. Dans la description de l'exemple d'exécution, on considérera qu'il s'agit de transducteurs piézo-électriques en forme de bâtonnets cylindriques en céramique tels que décrits dans les brevets FR 2 709 214 et 2 743 457. Ces bâtonnets sont identiques et appairés selon 3-5 et 4-6, les bâtonnets de chaque paire étant diamétralement opposés et symétriques relativement à l'axe du moteur. Les bâtonnets sont en outre régulièrement répartis autour de l'axe, de telle sorte qu'ils sont angulairement distants l'un de l'autre de 90°. Les bâtonnets de chaque paire sont polarisés en sens opposés comme l'indiquent les flèches sur le dessin. Par conséquent, lorsqu'on fait le tour du stator, on rencontre successivement deux bâtonnets 3 et 4 polarisés dans un sens, puis deux bâtonnets 5 et 6 polarisés dans l'autre sens. Les transducteurs 3 à 6 s'appuient contre le stator 2 par des pièces d'articulation coniques 8 comme décrit dans le brevet FR 2 773 924, pièces qui limitent le fléchissement des bâtonnets. Le stator 2 est pressé fortement par un pilier central, non représenté, contre les transducteurs 3 à 6. Le rotor 1 est lui-même pressé élastiquement contre le stator 2. Les moyens de précontrainte et de pression sont, par exemple, réalisés comme décrits et représentés dans le brevet FR 2 743 457. Le pilier central peut être évidé pour le passage d'un arbre sur lequel le rotor 1 est monté avec un léger jeu radial.

Les transducteurs diamétralement opposés forment un groupe alimenté par le même signal. Ils vibrent donc en opposition de phases. Les deux groupes sont alimentés par deux signaux en quadrature de phases, c'est-à-dire déphasés de π/2. L'alimentation est faite, par exemple, au moyen du circuit décrit dans le brevet FR 2 775 397 par l'intermédiaire d'un connecteur placé sur l'embase 7.

La structure pourrait bien entendu être symétrique comme décrit dans les brevets FR 2 709 214 et 2 743 457 avec un connecteur selon le brevet FR 2 745 664 placé dans le plan nodal, à la base commune des transducteurs.

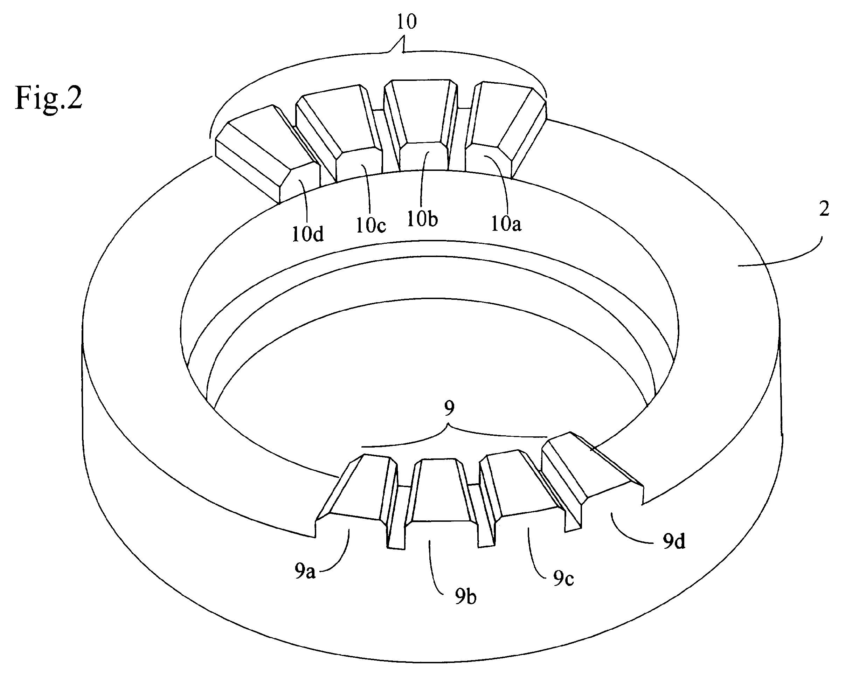

Le stator 2 diffère des stators selon l'art antérieur en ce que son contact avec le rotor 1 ne s'étend que sur deux segments de couronne 9 et 10 diamétralement opposés et de même longueur angulaire. Avantageusement, mais non nécessairement, ces segments 9 et 10 sont eux-mêmes subdivisés, par exemple en quatre dents 9a à 9d et 10a à 10d comme représenté à la figure 2. Ceci permet, comme il est connu, d'amplifier les vitesses tangentielles sans donner naissance à des stators trop rigides. En outre, l'étendue cumulée des segments 9 et 10 dans la direction circonférentielle est choisie inférieure ou égale à une longueur d'onde de l'onde progressive engendrée dans le stator. Dans l'exemple représenté, les huit dents d'appui représentent les dents subsistant des vingt-quatre dents d'un stator réalisé selon l'art antérieur. Dans la limite dimensionnelle indiquée ci-dessus, et si on veut éviter de devoir roder le stator une fois monté, on réduira encore cette étendue jusqu'à ce que la déformation statique engendrée par la précontrainte devienne inférieure à la déformation dynamique utile.

Les segments 9 et 10 sont situés soit en face de deux transducteurs, soit entre deux transducteurs.

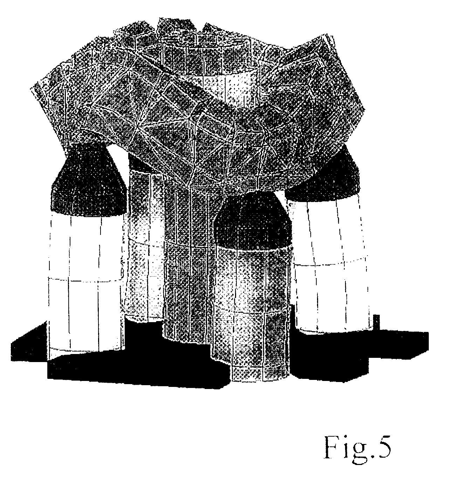

L'effet obtenu sera mieux compris par la simulation représentée à la figure 5 représentant un moteur selon l'art antérieur alimenté en mode 3. La figure montre l'onde progressive à trois longueurs d'onde et la simulation fait apparaître la déformation radiale, très exagérée : les zones correspondant à une crête subissent un déplacement centripète, alors que les zones correspondant à un creux subissent un déplacement centrifuge. Si toutes les dents sont conservées et qu'on presse le rotor contre le stator, il apparaît trois forces antagonistes à 120°, localisées sur les crêtes. Les mouvements centripètes entraînent bruit, échauffement et usure du rotor.

Selon l'invention on se conserve qu'un tiers (une longueur d'onde) de la zone de contact disponible. Supposons qu'à un instant donné le segment 9 correspond à une crête : alors le segment 10 est sur un creux. Les deux forces radiales ont donc le même sens et aucun effet antagoniste ne provoque de bruit. Le fait de conserver deux zones de contact diamétralement opposées n'apporte plus aucune contrainte au mouvement radial.

L'important est avant tout d'éviter le contact sur trois zones à 120°.

Les segments 9 et 10, respectivement leurs dents 9a à 9d et 10a à 10d, présentent soit une face de contact plane perpendiculaire à l'axe du stator, c'est-à-dire du moteur, soit une face inclinée relativement à cet axe, plus précisément une face située sur une surface conique dont le sommet est situé sur l'axe du moteur. Selon que les faces d'appui des segments sont planes ou coniques, le rotor présentera une surface de contact plane ou conique avec le stator et sa liaison avec l'arbre du moteur présente un jeu compatible avec des mouvements radiaux.

Chaque rotor pourrait être constitué de deux rotors concentriques, de préférence reliés élastiquement entre eux, dont l'un s'appuie par une face plane sur des segments de face plane et l'autre s'appuie par une face tronconique sur des segments de face conique. Dans ce cas, le stator peut présenter deux paires de segments d'appui décalées de 90°, l'une présentant des faces planes et l'autre des faces inclinées, respectivement coniques.

Lors de l'alimentation des transducteurs, apparaissent des mouvements elliptiques des segments 9 et 10, à la fois dans les directions tangentielles et radiales. Il y a contact dynamique important du rotor avec l'un des segments pendant une demi-période, puis avec les segments opposés pendant l'autre demi-période. Dans chaque cas, le contact est moteur dans le sens tangentiel. Il y a également mouvement radial du rotor vers la zone opposée pendant une demi-période, mouvement toléré par le jeu avec l'arbre, et mouvement inverse pendant la demi-période suivante.

La structure se prête aussi bien en fonctionnement en mode 3 qu'en mode 1. Dans ce dernier cas, l'étendue des segments de contact n'est limitée que par l'amplitude du voile de déformation statique du stator dont il faut masquer les effets.

Outre le fait qu'elle permet de supprimer les bruits émis et l'énergie dissipée par frottement radial, la structure selon l'invention présente l'avantage de permettre d'extraire, des signaux d'alimentation, une information sur la vitesse du rotor. En effet, la pression dynamique de contact influence directement les amplitudes et les phases relatives des courants absorbés sur chaque voie d'alimentation.

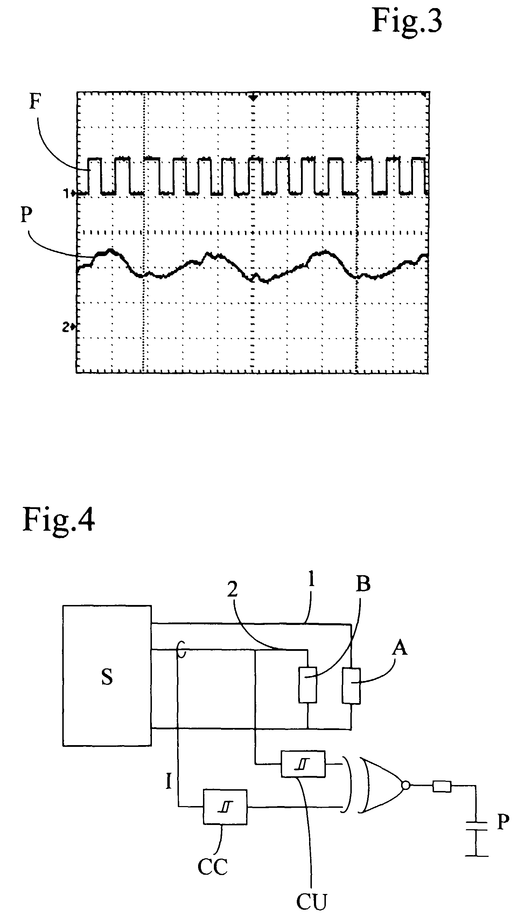

La figure 3 illustre un exemple d'enregistrement de la phase P relative entre l'intensité I d'une voie et la tension d'alimentation U pour un moteur à deux segments de contact. Le circuit utilisé à cet effet est un circuit bien connu de l'homme de l'art et qui est représenté pour mémoire à la figure 4. A et B représentent les deux paires de transducteurs alimentées par une source S. On mesure respectivement la tension U et le courant I dans une voie d'alimentation, tension et courant qui sont mis en forme et appliqués à un comparateur de phase. Le signal P est obtenu à la sortie filtrée du comparateur. Sur le même enregistrement, figure le signal logique F issu d'un capteur angulaire donnant huit impulsions par tour. On remarque la périodicité du signal P. Un examen attentif montre qu'une période de signal comprend deux alternances très légèrement différentes : il s'agit de deux contacts alternés sur les deux autres segments 9 et 10 qui ne sont pas rigoureusement identiques. L'homme du métier peut sans autre reconstituer, à partir de ce signal P, un signal logique dont la fréquence est donc le double de la fréquence de rotation du moteur, ce qui donne une mesure de la vitesse du moteur.

Dans le cas précédemment décrit, où sont utilisées deux paires de segments d'appui, décalées de 90°, l'une plane, l'autre inclinée, la fréquence du signal résultant des variations des pressions de contact devient quadruple de la fréquence de rotation des rotors.

L'important étant, avant tout, d'éviter un contact sur trois zones à 120°, on peut envisager un contact sur quatre segments. On peut, à la limite, réduire le contact à quatre segments de contact situés respectivement en face de chacun des transducteurs et dont l'étendue cumulée est inférieure à une longueur d'onde.

Dans ce cas, on constate qu'il y a quatre maximum de pression de contact par période complète. La mesure de vitesse est donc deux fois plus précise.

## Revendications

1. Moteur ultrasonique à onde progressive comprenant au moins un stator en forme de couronne (2), deux groupes de transducteurs électromécaniques (3 à 6) comprenant chacun au moins une paire de transducteurs longitudinaux diamétralement opposés, polarisés en sens opposés, disposés perpendiculairement au stator (2), c'est-à-dire parallèlement à l'axe du moteur, répartis sur le stator (2), en contact permanent avec le stator (2) et excités par un courant alternatif avec un déphasage de π/2 entre les groupes de manière à engendrer à la surface du stator (2) une déformation en forme d'onde progressive, et au moins un rotor (1) maintenu élastiquement en contact avec le stator (2) pour son entraînement en rotation par l'onde progressive engendrée sur le stator, caractérisé en ce que le stator n'est en contact avec le rotor que par au moins une paire de segments (9, 10) égaux et diamétralement opposés et dont l'étendue cumulée est au plus égale à une longueur d'onde de l'onde progressive engendrée dans le stator.

2. Moteur selon la revendication 1, caractérisé en ce que les segments de contact (9, 10) sont eux-mêmes segmentés en plusieurs dents (9a à 9d, 10a à 10d).

3. Moteur selon la revendication 1 ou 2, caractérisé en ce qu'il comprend deux paires de transducteurs (3 à 6) décalés de 90°, par stator.

4. Moteur selon la revendication 3, caractérisé en ce que les segments (9, 10) sont situés en face des transducteurs.

5. Moteur selon la revendication 4, caractérisé en ce que les segments sont au nombre de quatre.

6. Moteur selon l'une des revendications 1 à 3, caractérisé en ce que les segments (9, 10) sont situés entre les transducteurs.

7. Moteur selon l'une des revendications 1 à 6, caractérisé en ce que les segments (9, 10) présentent une face plane perpendiculaire à l'axe du moteur ou une face inclinée relativement à l'axe du moteur et que le rotor prend respectivement appui sur les faces planes par une partie plane ou sur les faces inclinées par une surface conique, respectivement tronconique.

8. Moteur selon l'une des revendications 1 à 6, caractérisé en ce que le stator (2) présente des segments de face plane perpendiculaire à l'axe du moteur et des segments de face inclinée relativement à l'axe du moteur et que deux rotors concentriques prennent appui, l'un sur les faces planes par une partie plane, l'autre sur les faces inclinées par une surface conique, respectivement tronconique.

9. Moteur selon la revendication 8, caractérisé en ce que les deux rotors concentriques sont reliés élastiquement entre eux.

10. Moteur selon la revendication 8 ou 9, caractérisé en ce que les segments à faces planes et les segments à faces inclinées sont décalés entre eux de 90°.

11. Moteur selon l'une des revendications 1 à 10, comprenant un arbre portant le rotor, caractérisé en ce que le rotor (1) est monté avec un jeu radial sur l'arbre du moteur.

12. Appareil de mesure de la fréquence de rotation d'un moteur comprenant un moteur selon l'une des revendications 1 à 11 associé à un dispositif de mesure de l'amplitude ou de la phase des courants d'alimentation et équipé de manière à délivrer directement un signal correspondant à la pression de contact sur les segments (9, 10), ladite fréquence étant un multiple de la fréquence de rotation du moteur.
